Europäisches Patentamt

European Patent Office

Office européen des brevets

(19)

(11) **EP 0 859 472 A1**

(12) **DEMANDE DE BREVET EUROPEEN**

(43) Date de publication:
**19.08.1998 Bulletin 1998/34**

(51) Int Cl.6: **H04B 1/707, H04L 27/18**

(21) Numéro de dépôt: **98400275.8**

(22) Date de dépôt: **09.02.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **13.02.1997 FR 9701663**

(71) Demandeur: **ALCATEL ALSTHOM COMPAGNIE GENERALE D'ELECTRICITE**
**75008 Paris (FR)**

(72) Inventeur: **Marchesani, Rossano**
**66100 Chieti (IT)**

(74) Mandataire: **Scheer, Luc et al**
**COMPAGNIE FINANCIERE ALCATEL**
**Département Propriété Industrielle**
**30, avenue Kléber**
**75116 Paris (FR)**

(54) **Emetteur à accès multiple par répartition de code**

(57) L'invention concerne un émetteur de signaux destiné à assurer l'émission simultanée de n signaux numériques (S1 à Sn) à l'attention de récepteurs. Chacun des n signaux numériques (S1 à Sn) est étalé par combinaison avec une séquence d'étalement (W1 à Wn) et les signaux étalés sont appliqués à un sommateur (11) fournissant un signal somme résultant. Le signal somme est appliqué à un modulateur (12) à phase continue fournissant un signal modulé (SM) à un amplificateur de puissance (13).

L'invention permet de limiter l'interférence entre canaux adjacents.

# FIG. 1

## Description

Le domaine de l'invention est celui de la transmission de données numériques en CDMA (Code Division Multiple Access). Plus précisément, la présente invention concerne un émetteur de signaux à accès multiple par répartition de code. ainsi qu'une station de base d'un réseau CDMA et un terminal mobile comprenant un tel émetteur.

Les techniques de modulation CDMA sont classiquement employées dans les systèmes de communication radio comprenant une pluralité d'émetteurs-récepteurs communiquant avec une station de base. Au niveau de cette station de base, tous les canaux de communication sont transmis sur une fréquence porteuse unique. Chaque canal a sa propre séquence d'étalement et les différentes séquences d'étalement sont en principe orthogonales entre elles. Ces séquences d'étalement sont classiquement des séquences de Walsh.

Avant transmission, les données de chaque canal sont modulées par une séquence d'étalement propre à ce canal et les différents signaux étalés sont sommés. Le signal somme résultant est modulé puis amplifié par un amplificateur de puissance avant d'être appliqué à une antenne pour transmission à l'attention des récepteurs. Chaque récepteur démodule le signal reçu en le combinant avec la séquence d'étalement utilisée à l'émission pour moduler les données destinées à ce récepteur. Les données destinées aux autres récepteurs véhiculées dans d'autres canaux constituent un bruit correspondant à de l'interférence inter-canaux.

Le problème posé par les systèmes de transmission existants est qu'au niveau émission. le signal issu du modulateur et appliqué à l'amplificateur de puissance précédant l'antenne possède une forte modulation d'enveloppe. Plus précisément, lorsque n signaux sont transmis en CDMA, la puissance moyenne du signal somme est proportionnelle à n alors que la puissance crête est proportionnelle à $n^2$. L'amplificateur de puissance est alors obligé de fonctionner dans une zone non linéaire et les canaux adjacents sont perturbés.

A titre d'exemple, si n=100 canaux doivent pouvoir être transmis sur la même fréquence porteuse et que chaque canal a une puissance de 100 mW, la puissance moyenne du signal somme est de 10 W alors que sa puissance crête est de 1000 W. Si l'on veut éviter un fonctionnement de l'amplificateur de puissance dans une zone non linéaire, il est nécessaire d'utiliser un amplificateur présentant une amplification linéaire à 1000 W alors qu'il n'amplifie en moyenne que 10 W. Le coût de l'amplificateur et son encombrement s'en trouvent alors fortement augmentés. L'utilisation d'un amplificateur moins puissant, bien que cette solution soit dans la pratique mise en oeuvre, n'est pas satisfaisante pour les problèmes d'interférence de canaux adjacents évoqués précédemment.

La présente invention a notamment pour objectif de remédier à ces inconvénients.

Plus précisément, un des objectifs de l'invention est de fournir un émetteur de signaux fonctionnant en CDMA où le signal issu du modulateur présente une modulation d'enveloppe réduite par rapport à l'état de la technique, ce qui permet de limiter l'interférence entre canaux adjacents.

Cet objectif, ainsi que d'autres qui apparaîtront par la suite, est atteint grâce à un émetteur de signaux destiné à assurer l'émission simultanée de n signaux numériques à l'attention de récepteurs, chacun des n signaux numériques étant étalé par combinaison avec une séquence d'étalement, les signaux étalés étant appliqués à un sommateur fournissant un signal somme résultant, le signal somme étant appliqué à un modulateur fournissant un signal modulé à un amplificateur de puissance. ce modulateur étant un modulateur à phase continue.

L'invention concerne également une station de base d'un réseau CDMA comprenant un tel émetteur, ainsi qu'un terminal mobile comprenant un tel émetteur.

D'autres caractéristiques et avantages de l'invention apparaîtront à la lecture de la description suivante d'un mode de réalisation préférentiel, donné à titre illustratif et non limitatif, et des dessins annexés dans lesquels :

- la figure 1 est un schéma synoptique d'un émetteur de signaux fonctionnant en mode CDMA selon la présente invention ;
- la figure 2 montre une constellation sur laquelle est représentée une transition entre deux états successifs de l'amplitude du signal appliqué à l'entrée du modulateur 12 de la figure 1 ;
- la figure 3 est un schéma synoptique d'un récepteur d'un signal transmis par l'émetteur de la figure 1.

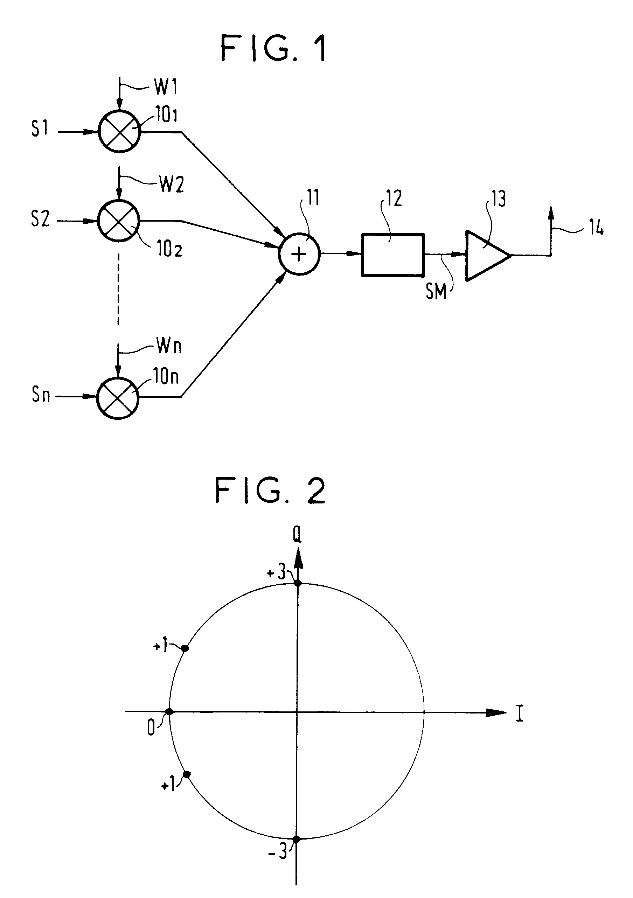

La figure 1 est un schéma synoptique d'un émetteur de signaux fonctionnant en mode CDMA selon la présente invention.

Cet émetteur est par exemple compris dans une station de base avec laquelle communiquent une pluralité de terminaux, généralement des terminaux mobiles. La fonction de l'émetteur est de transmettre en mode CDMA des signaux numériques S1 à Sn à ces terminaux, généralement également au nombre de n. A cet effet, chacun des signaux S1 à Sn est étalé, à l'aide de multiplieurs 101 à 10n, par une séquence d'étalement respective W1 à Wn, classiquement des séquences de Walsh. En pratique, les multiplieurs 101 à 10n sont constitués de portes OU-Exclusif. Les signaux étalés résultants sont appliqués à un sommateur 11 fournissant un signal somme résultant. Ce signal somme résultant est appliqué à un modulateur 12 fournissant un signal modulé SM à un amplificateur de puissance 14. Le signal amplifié est ensuite appliqué à une antenne d'émission 14 pour être transmis.

Selon l'invention, le modulateur 12 est un modulateur à phase continue, c'est à dire que pour chaque niveau d'amplitude du signal somme, la phase courante de la porteuse du signal transmis est modifiée d'un angle correspondant à ce niveau d'amplitude. La phase du signal transmis se déplace sur un cercle, comme dans le cas d'un modulateur MSK. Le niveau d'amplitude est susceptible d'évoluer à chaque temps chip. L'utilisation d'un modulateur à phase continue permet d'obtenir une enveloppe constante après modulation et une enveloppe quasi-constante après filtrage. Un tel filtrage est généralement réalisé en amont de l'amplificateur 13 afin de limiter la bande de fréquences.

La figure 2 montre une constellation sur laquelle est représentée une transition entre deux états successifs de l'amplitude du signal appliqué à l'entrée du modulateur 12.

On considère ici que n=3 signaux numériques étalés sont sommés dans l'additionneur 11. Chacun de ces signaux peut avoir pour valeurs +1 et -1. Les amplitudes possibles du signal somme sont donc :

+3 pour 1+1+1 ou
+1 pour 1+1-1 ou
-1 pour 1-1-1 ou
-3 pour -1-1-1.

En considérant que le point d'origine (état au temps t-1) est celui noté O, l'état à atteindre est l'un des quatre autres points représentés. Ces points sont ici compris sur un secteur angulaire de $\pm\pi/2$. La modulation à phase continue est telle que l'enveloppe est constante, c'est à dire que l'on reste toujours sur un cercle de rayon constant. Entre deux états successifs (entre t-1 et t), la phase n'évolue donc que sur ce cercle. Cette évolution s'effectue pendant une durée chip, c'est à dire pendant un temps dépendant de la fréquence des séquences d'étalement W1 à Wn. Ainsi, pendant la durée d'un temps chip, la phase de la porteuse évoluera de +90° (point +3), de +30° (point +1), de -30° (point -1) ou de -90° (point -3). La prochaine évolution de phase se fera à partir du point atteint.

La variation de phase maximale entre deux temps chips est fonction du nombre de canaux à transmettre et du bruit de phase de l'oscillateur local au niveau de l'émetteur. Lorsque le nombre de canaux est important et/ou le bruit de phase important, la variation de phase maximale peut être supérieure à $\pm\pi/2$ et par exemple atteindre $\pm\pi$ ou plus (un ou plusieurs tours du cercle), afin de garder une distance suffisante entre les symboles reçus. Il est dans ce cas nécessaire de prévoir un sur-échantillonnage au niveau du récepteur pour lever les ambiguïtés de phase éventuelles. Plus précisément, ceci permet de différencier une rotation de phase de $+\pi/2$ d'une rotation de phase de $-\pi/2$ ou alors une rotation de phase de $+\pi/2$ d'une rotation de phase de $-3\pi/2$ ou alors des rotations de phase identiques à $2\pi$ près.

L'invention consiste donc à combiner n signaux dans le domaine de la phase et la rotation de phase de la porteuse peut s'exprimer de la manière suivante :

$$\Phi(t) = \sum_i \phi_i(t)/n$$

avec $\phi_i(t)$ la rotation de phase due à chacun des n canaux.

Avantageusement, le nombre de valeurs de phases transmises est volontairement limité en divisant par exemple par $\sqrt{n}$ le signal issu du sommateur 11 avant modulation. Ce facteur correctif permet d'obtenir une variance de densité de probabilité de distribution de phase constante, et donc une densité spectrale de puissance constante, quel que soit le nombre n de canaux actifs.

Préférentiellement, la puissance du signal émis est figée en modifiant le gain de l'amplificateur de puissance 13 d'un facteur $\sqrt{n}$. Une puissance constante est ainsi assignée à chaque canal CDMA.

Le fait d'agir avec un facteur $\sqrt{n}$ simultanément sur l'amplificateur 13 et sur le signal appliqué au modulateur 12 permet d'obtenir une résistance constante vis à vis du bruit Gaussien.

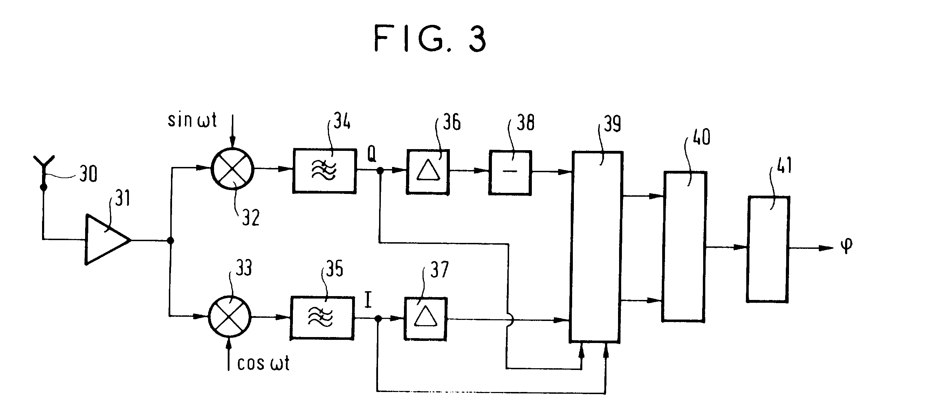

La figure 3 est un schéma synoptique d'un récepteur d'un signal transmis par l'émetteur de la figure 1. Ce récepteur comporte un démodulateur de type différentiel.

Le signal reçu par une antenne 30 est amplifié par un amplificateur faible bruit 31 avant d'être transposé en bande de base par un démodulateur en quadrature constitué par deux mélangeurs 32, 33 recevant des signaux en quadrature de phase sin $\omega$t et cos $\omega$t d'un oscillateur local non représenté. Les signaux de sortie des mélangeurs 32, 33 sont appliqués à des filtres passe-bas 34, 35 pour constituer des trains I et Q. Ces trains sont ensuite retardés par des unités à retard 36, 37. Le retard $\Delta$ apporté par ces unités est très inférieur au temps chip. Le train Q retardé est ensuite appliqué à un module d'inversion de signe 38. Les trains issus du module 38 et de l'unité 37 sont appliqués à un multiplieur complexe 39 recevant également les trains I et Q issus des filtres 34 et 35. En sortie du multiplieur complexe 39, on dispose donc de vecteurs situés du côté positif de l'axe réel. Afin de ne conserver que l'information sur la phase, les vecteurs sont appliqués à un extracteur de phase 40. Une autre solution consiste à ne s'intéresser qu'à la partie imaginaire des vecteurs issus du multiplieur complexe 39. Enfin, les phases observées sont appliquées à un intégrateur 41 fournissant tous les temps chip un signal correspondant à la différence de phase $\varphi$ entre deux points consécutifs de la constellation de la figure 2. Le signal $\varphi$ est ensuite désétalé par la séquence d'étalement utilisée à l'émission.

Bien entendu, d'autres structures de récepteurs sont possibles, celle de la figure 3 n'ayant été donnée qu'à titre indicatif.

L'invention concerne également une station de base d'un réseau CDMA comprenant un émetteur tel que décrit en référence à la figure 1.

L'invention s'applique également à un terminal mobile fonctionnant dans un réseau CDMA. L'intérêt d'utiliser un tel émetteur dans un terminal mobile est qu'une importante augmentation de débit par rapport à l'état de la technique est apportée, grâce à l'utilisation de plusieurs canaux CDMA.

L'invention permet donc une transmission en mode CDMA d'une pluralité de signaux en limitant l'interférence entre canaux adjacents.

**Revendications**

1. Emetteur de signaux destiné à assurer l'émission simultanée de n signaux numériques (S1 à Sn) à l'attention de récepteurs, chacun desdits n signaux numériques (S1 à Sn) étant étalé par combinaison avec une séquence d'étalement (W1 à Wn), lesdits signaux étalés étant appliqués à un sommateur (11) fournissant un signal somme résultant, ledit signal somme étant appliqué à un modulateur (12) fournissant un signal modulé (SM) à un amplificateur de puissance (13), caractérisé en ce que ledit modulateur (12) est un modulateur à phase continue.

2. Station de base d'un réseau CDMA, caractérisée en ce qu'elle comprend un émetteur selon la revendication 1.

3. Terminal, caractérisée en ce qu'il comprend un émetteur selon la revendication 1.

# FIG. 1

# FIG. 2

FIG. 3

EP 0 859 472 A1

**Office européen des brevets**

# RAPPORT DE RECHERCHE EUROPEENNE

Numéro de la demande

EP 98 40 0275

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 96 36144 A (UNISYS CORP)<br>* page 2, ligne 20 - ligne 37 *<br>* page 3, ligne 6 - ligne 25 *<br>--- | 1-3 | H04B1/707<br>H04L27/18 |
| A | GB 2 298 341 A (ROKE MANOR RESEARCH)<br>* page 1, ligne 1 - ligne 11 *<br>* page 2, ligne 1 - ligne 11 *<br>* page 4, ligne 19 - page 5, ligne 8 *<br>* page 7, ligne 23 - page 10, ligne 4; figures 4-12 *<br>--- | 1-3 | |
| A | US 5 490 172 A (KOMARA MICHAEL A)<br>* abrégé *<br>* colonne 1, ligne 61 - colonne 2, ligne 24 *<br>* colonne 2, ligne 50 - ligne 67 *<br>* colonne 3, ligne 60 - colonne 4, ligne 18; figure 1 *<br>* colonne 6, ligne 50 - colonne 7, ligne 63; figures 2A-2F *<br>--- | 1-3 | |
| A | US 5 025 452 A (SOHNER HAROLD K ET AL)<br>* colonne 7, ligne 35 - ligne 48; figure 3 *<br>----- | 1-3 | **DOMAINES TECHNIQUES RECHERCHES (Int.Cl.6)**<br><br>H04B<br>H04L<br>H04J |

Le présent rapport a été établi pour toutes les revendications

| Lieu de la recherche | Date d'achevement de la recherche | Examinateur |
|---|---|---|
| LA HAYE | 22 mai 1998 | Bossen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................
& : membre de la même famille, document correspondant

EPO FORM 1503 03.82 (P04C02)

7